# EUROPEAN PATENT SPECIFICATION

(11) **EP 3 268 433 B1**
(45) Date of publication and mention of the grant of the patent: **21.08.2024**
(21) Application number: 16714618.2
(22) Date of filing: 04.03.2016
(51) Int. Cl.: C08L 91/08, C10G 69/02, C10M 101/02

(54) **HIGH OIL CONTENT WAXES FOR FOOD GRADE AND HIGH QUALITY USES AND THE METHODS OF MAKING THE SAME**
WACHSE MIT HOHEM ÖLGEHALT NAHRUNGSMITTELQUALITÄT- UND HOCHQUALITATIVE VERWENDUNG UND VERFAHREN ZUR HERSTELLUNG DAVON
CIRES À TENEUR ÉLEVÉE EN HUILE POUR UTILISATION DE QUALITÉ ALIMENTAIRE ET DE HAUTE QUALITÉ ET PROCÉDÉS PERMETTANT DE LES FABRIQUER

(30) Priority: 11.03.2015 US 201562131367 P
(43) Date of publication of application: 17.01.2018
(73) Proprietor: ExxonMobil Technology and Engineering Company, Spring, TX 77389 (US)
(72) Inventor: AGRAWAL, Sarvesh, K., Woolwich Township, NJ 08085 (US); YOHE, Sara, L., Raritan, NJ 08869 (US); HOCH, Larry, E., Yardley, PA 19067 (US); TURNER, Elizabeth, A., Samia, Ontario N7S 6N1 (CA); WANG, Frank, C., Annandale, NJ 08801 (US)
(74) Representative: ExxonMobil Chemical Europe LLC
(86) International application number: PCT/US2016/020907
(87) International publication number: WO 2016/144761

(56) References cited:
- US-A- 2 734 365
- US-A1- 2013 264 246
- US-B1- 6 534 573
- ANONYMOUS: "ASTM D721-06 Standard Test Method for Oil Content of Petroleum Waxes", TEST METHOD FOR OIL CONTENT OF PETROLEUM WAXES, 1 January 2011 (2011-01-01), West Conshohocken, PA, XP055808015, Retrieved from the Internet <URL:www.astm.com> DOI: 10.1520/D0721-06R11
- ANONYMOUS: "ExxonMobil supported uses: Generic Use Mapping for Paraffin Waxes (Waxrex 1270, Waxrex 1280, Waxrex 1340)", 1 August 2009 (2009-08-01), XP055808383, Retrieved from the Internet <URL:https://www.yumpu.com/en/document/read/19632079/exxonmobil-supported-uses-generic-use-mapping-for-paraffin-> [retrieved on 20210527]
- ANONYMOUS: "ExxonMobil waxes designed for candle applications (Parvan, Waxrex)", 1 January 2017 (2017-01-01), XP055808390, Retrieved from the Internet <URL:https://www.exxonmobil.com/en-us/specialties/pds/gl-xx-waxrex-1280> [retrieved on 20210527]
- ANONYMOUS: "Waxrex 1280 (product specifications)", 1 May 2020 (2020-05-01), XP055808391, Retrieved from the Internet <URL:https://www.exxonmobil.com/en-us/specialties/pds/gl-xx-waxrex-1280> [retrieved on 20210527]
- ANONYMOUS: "Base oil", 23 January 2021 (2021-01-23), XP055807833, Retrieved from the Internet <URL:https://en.wikipedia.org/wiki/Base_oil#:~:text=API%20defines%20group%20I%20as,80%20and%20less%20than%20120%22.> [retrieved on 20210526]
- ANONYMOUS: "Significance of tests for Petroleum Products: seventh edition", 1 January 2003 (2003-01-01), West Conshohocken, PA, USA, pages 1 - 262, XP055276224, ISBN: 978-0-8031-2097-6, Retrieved from the Internet <URL:http://197.14.51.10:81/pmb/CHIMIE/petrochimie/Manual on Significance of Tests for Petroleum Products.pdf> [retrieved on 20160530]
- ANONYMOUS: "CFR - Code of Federal Regulations Title 21 CFR 172.886 Petroleum Wax", 1 April 2015 (2015-04-01), pages 1 - 11, XP055275406, Retrieved from the Internet <URL:https://www.accessdata.fda.gov/scripts/cdrh/cfdocs/cfcfr/CFRSearch.cfm?fr=172.886> [retrieved on 20160525]
- ANONYMOUS: "Scientific Opinion on the re-evaluation of microcrystalline wax (E 905) as a food additive", THE EFSA JOURNAL, vol. 11, no. 4, 1 April 2013 (2013-04-01), Parma, IT, pages 1 - 32, XP055276243, ISSN: 1831-4732, DOI: 10.2903/j.efsa.2013.3146
- ANONYMOUS: "WAXES AND RELATED MATERIALS; Category Analysis and Hazard Characterization", HIGH PRODUCTION VOLUME (HPV) CHEMICAL CHALLENGE PROGRAM, 21 January 2011 (2011-01-21), pages 1 - 63, XP055276210, Retrieved from the Internet <URL:http://www.petroleumhpv.org/petroleum-substances-and-categories/~/media/5EB9814DC71E4A7EA56D38A721CFA518.ashx> [retrieved on 20160530]

## Description

### FIELD

Methods are provided for using and forming high oil content waxes for food grade and high quality uses.

### BACKGROUND

It is well known to use wax to make candles. It is also well known to use food grade wax to coat corrugated boxes used to carry food products. In both of these applications, the waxes must be of a certain quality that meets or exceeds the requirements for the particular application. For example, as coatings for food items or in food packaging, the waxes have to meet food grade quality requirements. In candle applications, the finished waxes are required to have very low color and odor in order to provide a good appearance and perception of quality in high value candles.

The conventional wisdom is that the ability of a wax to meet or exceed the requirements for a particular application (e.g., the quality of the wax) inversely depends on the oil content of the wax. This is apparent in known wax refining applications, which typically take the form of a de-oiling process. It is known that de-oiling processes reduce the amount of oil in wax, increase the quality of the refined or finished wax, and, with respect to the aforementioned applications, makes such waxes even more suitable for such applications.

Paraffin waxes are petroleum-derived, primarily from solvent de-waxing of lubricant basestocks. After separation of lubricant basestocks, the waxes obtained typically have an oil content of from about 5.0% to about 50.0%wt, and are considered slack wax or "high" oil content wax. These high oil content waxes may be further de-oiled to a paraffin wax having an oil content of about 1.0% to about 5.0%wt; i.e., "semi-refined" or "scale wax." Further refinement may result in a "fully-refined" paraffin wax having less than about 1.0%wt oil content. Conventional wisdom is that only the semi-refined and fully-refined waxes are suitable for additional processing or finishing to improve color and odor characteristics to levels that are acceptable for food grade use. Depending upon the distillation cut, these waxes could belong to any of the viscosity grades, *e*.*g*., those provided by ASTM D445, and thus could be a light, medium of heavy viscosity grade. Due to lower level of refining, "high" oil content waxes have a much lower market value than fully-refined/finished waxes.

Because of the inverse relationship between the (quality and suitability of finished waxes and the oil content of the wax, high oil content paraffin waxes are considered unsuitable in candle applications due to their color and odor and especially in food coating and food packaging coating applications due to their inability to meet food quality requirements. Further, it is generally believed that high oil content wax leads to candle oil bleed which can be further exacerbated by the addition of fragrance in case of candle formulation development. It has been shown though that oil/fragrance bleed can be controlled through addition of (i) polymers, of the type taught, suggested, or disclosed in EP1560882 and U.S. Patent No. 6,534,573, (ii) microcrystalline wax (such as, for example, those taught and disclosed in the Presentation to ALAFAVE and the NCA by International Group Inc. ("IGI"), "Use of microcrystalline waxes in candles", 2007), and/or (iii) higher molecular weight slack waxes that contain higher quantity of branched iso-paraffins or non *n*-paraffins, of the type taught, suggested, or disclosed in U.S. Patent No. 7,445,648. In such cases, waxes with branched molecules/polymers have to be blended into straight cut high oil content waxes, thereby adding a significant additional cost to the wax manufacturer. While this procedure may improve the oil bleed characteristic of the wax, it does not improve the wax quality in terms of color and odor or FDA food quality.

As disclosed in U.S. Patent Nos. 6,019,804 and 6,769,905, several studies put an upper limit of about 1.0% oil in wax to make candles. Other studies have described the use of higher oil content paraffin waxes for candle application through use of expensive additives such as an elastomeric polymer (wax may contain from 1.0% to 45% oil content) (as disclosed in EP 1560882 and U.S. Patent No. 6,534,573), and tallow and fatty acids (as disclosed in EP1776869. In other cases, high oil contents of about 8.0% and higher have been described, as disclosed in U.S. Patent No. 7,445,648. However, these references do not address manufacture of a high quality and low cost, food grade quality wax with a high oil content and low color and odor properties.

Additionally, the prior art teaches that branched molecules/polymers have to be blended into straight cut high oil content waxes, which adds a significant additional cost to the wax manufacturer. As disclosed in U.S. Patent Application Publication No. 2004/0076732, a food grade wax composition was made and comprised a combination of wax esters, aldehydes, triglycerides, alcohols and free fatty acids, sterols and polar lipids, but without the use of any petroleum-derived paraffin wax. U.S. Patent No. 7,128,828, describes a process for making food grade waxes but it describes the use of a semi-refined, low oil content wax feedstock.

Generally, global rationalization of Group I base stock refining capacity has led to a declining availability of corresponding wax streams that are derived from these base stocks, with the decline especially rapid for light neutral (low viscosity grade) waxes. With a reduction in available sources of wax, there is a need to have the flexibility of blending different available wax streams without a deterioration in product properties and reduce costs associated with other prior art wax manufacturing processes. As another objective, with reduced availability of wax streams, it has become even more important to upgrade the use of the available wax molecules in way such the wax volumes available for use in higher value applications of wax are maximized. For example, as in the currently described case, use of waxy molecules that are typically removed along with oily molecules in a typical deoiling process can be made available for use in higher value applications by upgrading them to a higher value food grade product with improved color and odor. This in turn allows for reduction in cost of the wax to the customers and allows for increase in volume of the waxes produced.

### SUMMARY

Presently described are compositions comprising a finished paraffin wax having relatively high oil content, methods of making and using the same, including, by way of non-limiting example, for manufacturing of candles or as a candle blend component, and/or food grade wax for packaging, food coating, pharmaceutical or biomedical applications. It was surprisingly and unexpectedly discovered that high quality or food grade quality and low color paraffin waxes can be produced from paraffin stock having relatively high oil in wax content. As described herein, wax formulations of high quality are produced from waxes of high oil content, which takes advantage of flexibilities in manufacturing processes, e.g., blending different available wax streams without deterioration in product properties and/or maximized use of available wax molecules, and thereby increase high quality wax production volume and/or increase high quality wax availability and volumes.

Thus, in a first aspect, the description provides a finished paraffin wax composition comprising a paraffin wax having an oil in wax content of from about 5.5%wt to about 33%wt, wherein the finished paraffin wax has low color and/or low odor, and meets FDA food grade quality requirements, while maintaining high oil content. In certain embodiments, the wax comprises a mixture of paraffin waxes in which at least one of the component paraffin waxes has an oil in wax content of from about 5.5%wt to about 33%wt and is finished, wherein the finished paraffin wax has low color and/or low odor, and meets FDA food grade quality requirements, while maintaining high oil content. In any of the aspects or embodiments described herein, the finished paraffin wax has a sulfur content of ≤ about 30 mg/kg.

In an additional aspect, the disclosure provides items formed from the wax compositions as described herein. In certain embodiments, the wax items include a candle or a component of candle, crayon.

In another aspect, the description provides a wax-coated article, e.g., a box or food container, food item, pharmaceutical, pharmaceutical dosage form, or the like, comprising a partial or complete wax coating, wherein the wax is a wax composition as described herein. In certain aspects, the description provides a pharmaceutical dosage form comprising a wax composition as described herein.

In an additional aspect, the disclosure provides methods of making the wax compositions as described herein.

In still an additional aspect, the disclosure provides methods of using the wax compositions as described herein. In certain embodiments, the disclosure provides a method of forming a wax-coated article or material comprising providing the item and applying a coating of the wax composition as described herein.

In certain embodiments, the disclosure provides a method of forming a wax-coated container comprising providing a container having a surface, forming or providing a wax composition as described herein and applying the wax composition to the container.

In certain additional embodiments, the wax coating is a partially or approximately complete coating of the surface(s) of an article or material. In certain embodiments the wax is absorbed into the material. In certain embodiments, the neat molten wax is sprayed on a material to form a partial or approximately complete coating. In certain embodiments, the wax composition as described herein can include additional additives.

### BRIEF DESCRIPTION OF THE DRAWINGS

The accompanying drawings, which are incorporated into and form a part of the specification, illustrate several embodiments of the present disclosure and, together with the description, serve to explain the principles of the disclosure. The drawings are only for the purpose of illustrating an embodiment of the disclosure and are not to be construed as limiting the disclosure. Further objects, features and advantages of the disclosure will become apparent from the following detailed description taken in conjunction with the accompanying figures showing illustrative embodiments of the disclosure, in which:
Figure 1 illustrates an exemplary 2DGC of an unfinished wax sample.
Figure 2 illustrates an exemplary 2DGC of a hydro-finished form of a wax sample.
Figure 3 illustrates an exemplary 2DGC of the unfinished wax sample from Figure 1.
Figure 4 illustrates an exemplary 2DGC of the hydro-finished form of a wax from Figure 2.

### DETAILED DESCRIPTION

Presently described are compositions comprising a finished paraffin wax having relatively high oil content, methods of making and using the same, including, by way of non-limiting example, for manufacturing of candles or as a candle blend component, and/or food grade wax for packaging, pharmaceutical or biomedical applications.

Currently, food grade quality wax products exist that have a maximum oil content of up to 5.0%, for example, Waxrex 1250 and Waxrex 1350 products. Other food grade quality waxes have much lower oil contents of less than 1%, more typically less than 0.5% as measured by ASTM D-721. It was surprisingly and unexpectedly discovered that high quality or food grade quality and low color paraffin waxes can be produced from paraffin stock having relatively high oil in wax content. As described herein, wax formulations of high quality are produced from waxes of high oil content, which takes advantage of flexibilities in manufacturing processes, *e*.*g*., blending different available wax streams without deterioration in product properties and/or maximized use of available wax molecules, and thereby increase high quality wax production volume and/or increase high quality wax availability and volumes.

The following is a detailed description of the disclosure provided to aid those skilled in the art in practicing the present disclosure. Unless otherwise defined, all technical and scientific terms used herein have the same meaning as commonly understood by one of ordinary skill in the art to which this disclosure belongs. The terminology used in the description of the disclosure herein is for describing particular embodiments only and is not intended to be limiting of the disclosure.

It should also be understood that, unless clearly indicated to the contrary, in any methods claimed herein that include more than one step or act, the order of the steps or acts of the method is not necessarily limited to the order in which the steps or acts of the method are recited.

The following terms are used to describe the present disclosure. In instances where a term is not specifically defined herein, that term is given an art-recognized meaning by those of ordinary skill applying that term in context to its use in describing the present disclosure.

The articles "a" and "an" as used herein and in the appended claims are used herein to refer to one or to more than one (i.e., to at least one) of the grammatical object of the article unless the context clearly indicates otherwise. By way of example, "an element" means one element or more than one element.

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of' or "exactly one of," or, when used in the claims, "consisting of," will refer to the inclusion of exactly one element of a number or list of elements. In general, the term "or" as used herein shall only be interpreted as indicating exclusive alternatives (i.e., "one or the other but not both") when preceded by terms of exclusivity, such as "either," "one of," "only one of," or "exactly one of."

The term "about" or "approximately" means an acceptable error for a particular value as determined by one of ordinary skill in the art, which depends in part on how the value is measured or determined. All numerical values within the detailed description and the claims herein are modified by "about" or "approximately" the indicated value, and take into account experimental error and variations that would be expected by a person having ordinary skill in the art.

In the claims, as well as in the specification above, all transitional phrases such as "comprising," "including," "carrying," "having," "containing," "involving," "holding," "composed of," and the like are to be understood to be open-ended, i.e., to mean including but not limited to. Only the transitional phrases "consisting of and "consisting essentially of' shall be closed or semi-closed transitional phrases.

As used herein in the specification and in the claims, the phrase "at least one," in reference to a list of one or more elements, should be understood to mean at least one element selected from anyone or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified. Thus, as a nonlimiting example, "at least one of A and B" (or, equivalently, "at least one of A or B," or, equivalently "at least one of A and/or B") can refer, in one embodiment, to at least one, optionally including more than one, A, with no B present (and optionally including elements other than B); in another embodiment, to at least one, optionally including more than one, B, with no A present (and optionally including elements other than A); in yet another embodiment, to at least one, optionally including more than one, A, and at least one, optionally including more than one, B (and optionally including other elements); etc.

It will be understood that, although the terms "first", "second", etc. may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, a first element, component, region, layer or section discussed below could be termed a second element, component, region, layer or section without departing from the teachings of example embodiments.

Spatially relative terms, such as "beneath," "below," "lower," "above," "upper" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" the other elements or features. Thus, the exemplary term "below" can encompass both an orientation of above and below. The device may be otherwise oriented (rotated 90 degrees or at other orientations) and the spatially relative descriptors used herein interpreted accordingly.

As used herein, the term "finished wax" or the like refers to a wax that has gone through a process, e.g., hydro-finishing, to improve its color and odor. As indicated above, conventional wisdom was that only semi- or fully-refined wax feedstocks (i.e., waxes with an OIW of less than about 1%wt) were suitable for finishing to food grade and high quality waxes.

### Wax Compositions

In certain embodiments, the description provides hydro-finished waxes as described herein. It was surprisingly discovered that a wax having a relatively high oil content could be processed by hydro-finishing to create a high quality, food grade wax.

Paraffin wax is a white or colorless soft solid derivable from petroleum, coal or oil shale by distillation. The feedstock for paraffin is slack wax, which is a mixture of oil and wax, a byproduct from the refining of lubricating oil. The first step in making paraffin wax is to remove the oil (de-oiling or de-waxing) from the slack wax. The oil is generally separated through crystallization. Most commonly, the slack wax is heated, mixed with one or more solvents such as a ketone and then cooled. As it is cooled, wax crystallizes out leaving oil in solution. This mixture is filtered into two streams: solid (wax plus some solvent) and liquid (oil and solvent). After the solvent is recovered by distillation, the desired carbon cuts are obtained. The resulting products are called "product wax" (or "press wax") and "foots oil". The lower the percentage of oil in the wax the more refined it is considered (semi-refined versus fully refined). The product wax may be further processed to remove colors and odors.

Paraffins (general formula CₙH₂ₙ₊₂; wherein n = 1 through 400) are a mixture of hydrocarbons containing from about 18 to about 60 carbon atoms per molecule. Paraffins are less volatile than gasoline, and the constituents include n-dodecane, alkyl benzenes, and naphthalene and its derivatives. Paraffins can be arranged either in straight chains (i.e., normal or n-paraffins) or branched chains (i.e., isoparaffins). Most of the paraffin compounds in naturally occurring crude oils are normal paraffins, while isoparaffins are frequently produced in refinery processes. Longer-chain paraffins are major constituents of waxes. Paraffin wax is solid at room temperature and begins to melt above approximately 37 °C (99 °F); its boiling point is >370 °C (698 °F).

Lower molecular weight paraffins have a lower boiling point, while higher molecular weight paraffins have a higher boiling point. Therefore, separation of paraffins by the carbon number is possible. However, higher carbon number fractions or cuts typically have a higher 95% carbon number spread (i.e., there is a wider distribution in the carbon number in the higher molecular weight or higher carbon number fractions). The 95% carbon number spread is the average number of carbon variation in the distribution of paraffins. For example, low molecular weight paraffins, e.g., C27 or C28 typically have a 95% carbon number spread of approximately 12.3; whereas, high molecular weight paraffin, e.g., C38, typically has a 95% carbon number spread of approximately 22.5.

As described above, unexpectedly, very high quality finished paraffin waxes with low color and odor that meet food quality standards as determined according to the methods described herein were derived from waxes having a relatively high oil in wax (OIW) content, e.g., from about 5%wt to as high as about 33%wt. Thus, in certain embodiments the description provides a high value food grade quality finished wax derived from a wax having an OIW content of from about 5%wt to as high as about 33%wt, or from about 5%wt to about 25%wt, or in certain additional embodiments, the finished wax is derived from a wax having an OIW of about 5, 6, 7, 8, 9, 10, 11, 12 ,13, 14, 15, 16, 17, 18, 19, 20, 21, 22, 23, 24, 25, 26, 27, 28, 29, 30, 31, 32, or 33%wt, and including all values in between. In such paraffin waxes, the sulfur content is required to be less than or equal to about 30 mg/kg in the wax, most preferably between 0 mg/kg and about 24.8 mg/kg.

It was also unexpected that a hydro-finishing process could be used to prepare such high quality waxes having a low color as measured by Saybolt color value of >14, *e.g.*, as per ASTM D6045, even with very high oil contents. Hence, for the purposes of this disclosure, low color is defined as a Saybolt color value of greater than 14 per ASTM D6045. Reference will be made to Table 1 for examples of these unexpected results.

It was also unexpected that a hydro-finishing process could be used to prepare such high quality waxes having a low odor as measured by an ASTM D1833 odor value of 2 or less (0 or 1 or 2). The ASTM D1833 odor panel scale range from 0 to 4 based on a panel of about 5 people. 0 (none), 1 (slight), 2 (moderate), 3 (strong) and 4 (very strong) is the scale for odor used by ASTM D1833. Hence, for the purposes of this disclosure, low odor is defined as an ASTM D 1833 odor value of 0 to 2, and more preferably 0 to 1.

Thus, in a first aspect, the description provides a finished paraffin wax composition comprising a paraffin wax having an oil in wax content of from about 5.5%wt to about 33%wt, wherein the finished paraffin wax has low color and/or low odor, and meets FDA food grade quality requirements (e.g., as determined using UV absorbance of waxes by the FDA method described herein), while maintaining high oil content. In certain embodiments, the wax comprises a mixture of paraffin waxes in which at least one of the component paraffin waxes has an oil in wax content of from about 5.5%wt to about 33%wt and is finished, wherein the finished paraffin wax has low color and/or low odor, and meets FDA food grade quality requirements (e.g., as determined using UV absorbance of waxes by the FDA method described herein --- FDA 21CFR 172.886 UV Absorbance), while maintaining high oil content. In certain embodiments, the wax comprises a mixture of paraffin waxes in which at least one of the component paraffin waxes has an oil in wax content of from about 10.0%wt to about 20%wt. In any of the aspects or embodiments described herein, the finished paraffin wax has a sulfur content of less than or equal to about 30 mg/kg. In certain embodiments, the wax comprises a finished paraffin wax having an oil in wax content of from about 5.5%wt to about 25%wt, and a sulfur content of ≤ about 30 mg/kg.

In any of the embodiments described herein, the finished wax can have a sulfur content of about 30, 29, 28, 27, 26, 25, 24, 23, 22, 21, 20, 19, 18, 17, 16, 15, 14, 13, 12, 11, 10, 9, 8, 7, 6, 5, 4, 3, 2, 1, or 0 mg/kg.

In an additional aspect, the disclosure provides items formed from the wax compositions as described herein. In certain embodiments, the wax items include a candle or a component of candle, or a crayon. Other common applications for paraffin wax compositions, which represent additional embodiments, including the paraffin wax compositions described herein, include lubrication, pharmaceutical fillers, coatings for pharmaceutical dosage forms, food coatings, food container coatings, bandages, electrical insulation, sealants, food additives and coatings, candles, wax crayons, and saturating wax coatings of cellulosic materials, anti-caking agent, moisture repellent, and dustbinding coatings for fertilizers; agent for preparation of specimens for histology; bullet lubricant - with other ingredients, such as olive oil and beeswax; phlegmatizing agent, commonly used to stabilize/desensitize high explosives such as RDX; solid propellant for hybrid rocket motors; component of surfwax or glidewax; friction-reducer, for use on handrails and cement ledges; ink; glazing agent; forensic tests; antiozonant agents: a release agent, helping the product separate from its mold; mechanical thermostats and actuators, as an expansion medium for activating such devices; wax baths for beauty and therapy purposes; thickening agent in paintballs; moisturizer in toiletries and cosmetics; protectant from metal oxidation; phase change material for thermal energy storage; among others.

In another aspect, the description provides a finished paraffin wax candle comprising a paraffin wax having an oil in wax content of from about 5.5%wt to about 25%wt, and a sulfur content of ≤ about 30 mg/kg, wherein the finished paraffin wax has low color and/or low odor, and meets FDA food grade quality requirements, while maintaining high oil content. In certain embodiments, the sulfur content in the finished paraffin wax is about 30, 29, 28, 27, 26, 25, 24, 23, 22, 21, 20, 19, 18, 17, 16, 15, 14, 13, 12, 11, 10, 9, 8, 7, 6, 5, 4, 3, 2, 1 or 0 mg/kg, including all values in between.

In certain embodiments, the description provides a wax composition, comprising from about 90% to about 99.99% of a paraffin wax having an oil in wax (OIW) content of between about 5.5%wt and about 25.0%wt and having between about 0 mg/kg and about 30 mg/kg sulfur; and from about 0.01% by weight to about 10% by weight of an additive or combination of additives. Some of such additives could be a microwax, unrefined petrolatum, triglyceride based waxes/compositions, paraffin waxes with a significant quantity of non n-paraffins and branched paraffins and various polymers. A polymer additive maybe incorporated into the wax compositions disclosed herein. The polymer additive can have a hydrophobic backbone for good miscibility with the wax. The polymer additive can also be functionalized with polar functional groups, to improve the interaction of the wax composition with hydrophilic surfaces, such as paper surfaces or the surfaces of clay nanoparticles. The backbone of the polymer additive can be any convenient type of polymer that has a primarily hydrophobic character, such as polyethylene. A polymer backbone having a primarily hydrophobic character is defined as a polymer backbone that, prior to functionalization, is soluble in paraffin wax. Suitable polymer backbones can include homopolymers and/or polymers having multiple types of "mer" units. Non-limiting examples of suitable polymer backbones can include polypropylene, polystyrene, polyethylene. Introduction of the polar groups into a polymer with a primarily hydrophobic backbone can improve the bonding between the polymer and a cellulosic surface, such as a cardboard surface. Without being bound by any particular theory, it is believed that the additional polar groups can improve the interaction between the functionalized polymer and hydroxyl groups present at the surface of the cellulosic material. Examples of such functionalized polymers that can bond with a polar cellulosic surface include, but are not limited to, maleic anhydride functionalized polymers, terpolymers and blends, oxazoline and epoxide modified compounds such as glycidyl methacrylate functionalized polymers, carboxylic acid modified polymers such as ethylene acrylic acid, carboxylic acid derivative modified polymers, vinyl alkanoate modified polymers such as ethylene vinyl acetate, other acid anhydride modified polymers, ionic compound modified polymers, amine modified compounds and various combination or blends of the same.

### Coating Metbods/Articles

In still an additional aspect, the disclosure provides methods of using the wax compositions as described herein. In certain embodiments, the disclosure provides a method of forming a wax-coated article or material comprising providing the item and applying a coating of the wax composition as described herein.

In certain embodiments, the disclosure provides a method of forming a wax-coated container comprising providing a container having a surface, forming or providing a wax composition as described herein and applying the wax composition to the container.

In certain additional embodiments, the wax coating is a partially or approximately complete coating of the surface(s) of an article or material. In certain embodiments the wax is absorbed into the material. In certain embodiments, the neat molten wax is sprayed on a material to form a partial or approximately complete coating. In certain embodiments, the wax composition as described herein can include additional additives.

### Methods of Manufacturing Paraffin Wax as Described Herein

In another aspect the description provides methods of manufacturing a wax composition as described herein. In certain embodiments, the method of manufacturing a finished wax composition, e.g., for a candle application and a food packaging application, comprises the steps of refining an unfinished wax composition having an OIW of up to about 50%, hydrofinishing first wax composition to reduce the sulfur content in the wax and achieve between about 0 mg/kg and about 30 mg/kg sulfur, and producing the wax composition as described herein.

The description provides the following exemplary embodiments, which are only provided by way of illustrative example only and are not to be construed as limiting.

### EXAMPLES

A series of pilot plant wax hydro-finishing runs were conducted to evaluate increasing the use of low value wax streams in products. The runs included five feeds, which were hydro-finished to ascertain the maximum level of oil content allowed in unfinished wax and hydro-finished wax samples that would also produce a wax composition that met FDA food contact requirements. The feeds ranged in OIW values from 3.2%wt to 20%wt. Pilot plant process conditions closely match that of a standard single-stage commercial wax Hydro-finishing unit:
Hydrogen Partial Pressure: 1100 psig
Hydrogen Treat Gas Rate: 635 scf/bbl
Reaction Temperature: 500-580°F
Liquid Hourly Space Velocity: 1-1.3 hr⁻¹
Catalyst: Criterion DN200 (Nickel/Molybdenum Hydrotreating Catalyst).

A detailed description of the hydrotreatment/hydrofinishing process is described in US 2013/0264246 (see p9), which is incorporated by reference in its entirety.

**Table 1a.**

| **Sample Type** | **Sample Name** | **Oil in Wax Content % (ASTM D721)** | **LHSV (hr⁻¹)** | **Reactor 1 Temp. (°F)** | **ASTM D2622 S Level (mg/kg)** | **N by Chemilum inescence (ppm)** | **UV Absorbs nce at 275 nm (1/g-cm)** | **FDA 21 CFR 172.886 UV Absorbance (280-289nm range) (1/cm)** | **Product Passed FDA specs?** | **ASTM D6045 Saybolt Color** | **ASTM D1833 Odor** |
|---|---|---|---|---|---|---|---|---|---|---|---|
| **Feeds** | Unfinished Wax A | 3.18 | | | 54.2 | 3 | 0.016 | 0.168 | **NO** | 13 | 3 |
| | Unfinished Wax B | 4.92 | | | 65.6 | 1 | 0.04 | 0.292 | **NO** | <-16 | 4 |
| | Unfinished Wax C | 7.4 | | | 96.5 | 4 | 0.045 | 0.437 | **NO** | <-16 | |
| | Unfinished Wax D | 11.96 | | | 185 | 6 | 0.067 | 0.828 | **NO** | 2 | 2 |
| | Unfinished Wax E | 19.15 | | | 330 | 6 | 0.123 | 1.388 | **NO** | <-16 | 4 |
| **Hydrofinished Pdoducts** | Finished Wax A | 2.13 | 1 | 540 | <5 | 1 | 0.001 | 0.007 | **Yes** | >+30 | 1 |
| | Finished Wax B1 | 4.96 | 1 | 580 | <5 | 1 | 0.001 | 0.019 | **Yes** | 30 | 1 |
| | Finished Wax B2 | 4.77 | 1 | 540 | <5 | 1 | 0.002 | 0.011 | **Yes** | 26 | 0 |
| | Finished Wax C | 6.99 | 1 | 580 | <5 | 3 | 0.002 | 0.019 | **Yes** | 25 | 2 |
| | Finished Wax D1 | 10.59 | 1 | 540 | <5 | 2 | 0.005 | 0.005 | **Yes** | >+30 | 1 |
| | Finished Wax D2 | 12.03 | 1 | 580 | <5 | 1 | 0.008 | 0.003 | **Yes** | >+30 | 0 |
| | Finished Wax D3 | 13.05 | 1.3 | 540 | 5.1 | 1 | 0.012 | 0.000 | **Yes** | 12* | 4* |
| | Finished Wax D4 | 11.07 | 1.3 | 500 | 24.8 | 1 | 0.021 | 0.009 | **Yes** | 16 | 1 |
| | Finished Wax F | 18.17 | 1 | 540 | 11.3 | 1 | 0.024 | 0.009 | **Yes** | 23 | 1 |

| | | | | | | | | | | | |
|---|---|---|---|---|---|---|---|---|---|---|---|
| *Color and Odor data on finished wax D3 is suspected to have a higher error than normal test method error | | | | | | | | | | | |

**Table 1b.**

| **Sample Description** | | | **FDA 21 CFR 172.886 UV Absorbance per cm path length in different wavelength ranges** | | | |
|---|---|---|---|---|---|---|
| **Sample Type** | **Sample Name** | **Product Passed FDA specs?** | **280-289 nm** | **290-299 nm** | **300-359 nm** | **360-400 nm** |
| **Feeds** | Unfinished Wax A | NO | 0.168 | 0.13 | 0.094 | 0.001 |
| | Unfinished Wax B | NO | 0.292 | 0.226 | 0.161 | 0.021 |
| | Unfinished Wax C | NO | 0.437 | 0.347 | 0.254 | 0.039 |
| | Unfinished Wax D | NO | 0.828 | 0.7 | 0.52 | 0.062 |
| | Unfinished Wax E | NO | 1.388 | 1.092 | 0.82 | 0.138 |
| **Hydrofinished Pdoducts** | Finished Wax A | Yes | 0.007 | 0.003 | 0 | 0 |
| | Finished Wax B1 | Yes | 0.019 | 0.015 | 0.011 | 0.004 |
| | Finished Wax B2 | Yes | 0.011 | 0.008 | 0.006 | 0.001 |
| | Finished Wax C | Yes | 0.019 | 0.015 | 0.008 | 0.001 |
| | Finished Wax D1 | Yes | 0.005 | 0.004 | 0.003 | 0.001 |
| | Finished Wax D2 | Yes | 0.003 | 0.005 | 0.005 | 0 |
| | Finished Wax D3 | Yes | 0 | 0.001 | 0.002 | 0.001 |
| | Finished Wax D4 | Yes | 0.009 | 0.007 | 0.006 | 0.001 |
| | Finished Wax E | Yes | 0.009 | 0.007 | 0.006 | 0.001 |
| **Maximum UV Absorbance per cm path length in various wavelength ranges according to FDA 21 CFR 172.886** | | | **0.15** | **0.12** | **0.08** | **0.02** |

Table 1a. included feeds and hydro-finished products, sample OIW values, process conditions, and hydro-finished wax product properties such as UV absorbance values per centimeter path length in the 280-289 nm wavelength range according to FDA test "21CFR 172.886 Ultraviolet absorbance per centimeter path length, Part A" done on the wax samples and UV absorbance level (1/g-cm) (@275 nm) on the total wax, sulfur (ASTM D-2622), and nitrogen by chemiluminescence levels, FDA test pass/fail levels according to the specifications in 21 CFR 172.886 and described in the tables 1b above and Saybolt color (ASTM D6045) values for the waxes. Table 1b. describes in further details the UV absorbance values per centimeter path length for all wavelength ranges obtained according to FDA test "21CFR 172.886 Ultraviolet absorbance per centimeter path length, Part A" done on all the wax samples and compared to the maximum UV absorbance spec described in the 21CFR 172.886 to meet FDA pass requirements for the test.

The hydro-finished wax product property data in Table 1 shows that all hydro-finished wax products met FDA UV absorbance specifications for use as food grade quality wax using typical commercial processing conditions (no ASTM but typical commercial processing condition ranges described in US 2013/0264246), even for feeds containing as high as 20% OIW. Table 1 further illustrates that a hydro-finished wax with very high oil content, for example, up to about 20%, had a very favorable odor and low color with a Saybolt color value above 14. Such results represent wax compositions whose characteristics suggest high quality and suitability for use in candle applications, *e*.*g*., low color in the wax.

Hydro-finished wax compositions with OIW ranging from about 5.0% to about 25% with sulfur content less than about 30 mg/kgmay be made via methods that require less de-oiling than is otherwise required due to the allowance of high oil content in the wax. As a result, reduced de-oiling procedures in wax production may lead to increases in the finished wax yields and amount of wax recovered from the wax manufacturing process, thereby resulting in larger volume of finished wax available to the market. As a further result, such processes may lead to lowered costs of manufacturing such finished wax compositions.

The compositional character of the finished wax may be further characterized by use of UV absorptivity at a wavelength range of 275 nm, which is typically expected to characterize the amount of 2 or more ring aromatics in the wax sample. As can be seen in Table 1, the UV absorbance at 275 nm for some samples that passed FDA test (Finished samples D4 and E) is higher than the levels of some samples that did not pass FDA test (Unfinished sample A).

Thus as described in the paragraph above, the total aromatic content of a wax may not necessarily be a sufficient indicator of the food grade quality of the wax or more particularly, certain types of aromatics may be a better indicator than others. It is demonstrated here that paraffin waxes with high oil contents may have a very low aromatic content, while high contents of napthenic molecules and highly branched iso-paraffinic molecules may contribute to the high oil content of the wax. This difference can be characterized through use of 2-dimensional Gas chromatography ("2DGC") technique, which is described in U.S. Patent Nos. 7,642,095 and 7,641,786, the contents of each of which being incorporated herein by reference in their entireties. The 2DGC technique separates the molecules available in the wax by the boiling point and by the polarity of the molecule. Hence, molecules with multi ring aromatics are separated from single ring aromatic molecules which are further separated from napthenic molecules and further from n- and iso-paraffinic molecules on the polarity axis. The results allow for detailed characterization of the molecules in the wax.

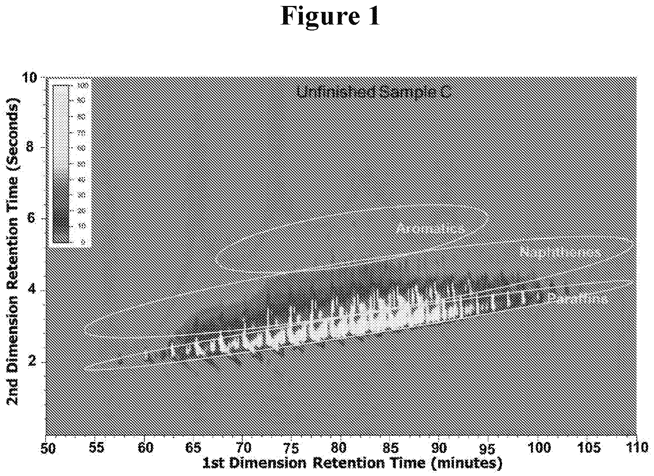

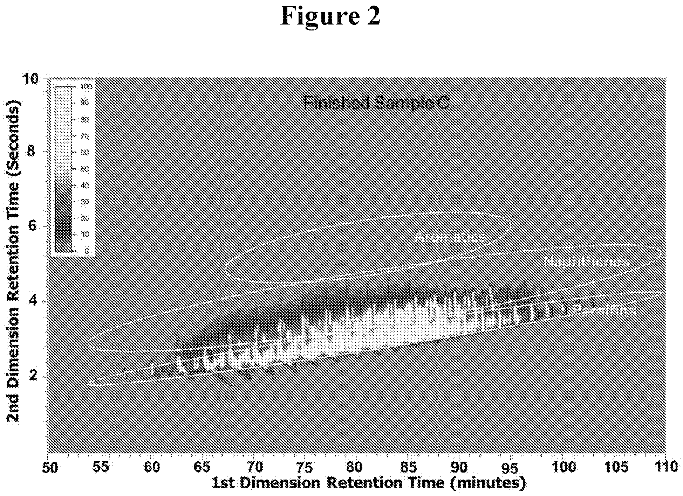

Figure 1 illustrates an exemplary 2DGC of an unfinished wax sample C ("Unfinished Sample C") and Figure 2 illustrates an exemplary 2DGC of a hydro-finished form of wax sample C ("Finished Sample C"). Following hydrofinishing, the amount of paraffin molecules (n-paraffin and iso paraffin) in the Sample C may remain substantially unchanged, while the aromatic molecules are saturated and are converted to naphthenic molecules. What results is a substantial increase in quality of the wax composition substantially without deviations in the oil content. Table 2 sets forth in weight percentages of the composition of the Unfinished Sample C and Finished Sample C according to the illustrative embodiments of Figures 1 and 2.

**Table 2**

| | **Unifinished Sample C** | **Finished Sample C** |
|---|---|---|
| **Class** | **wt%** | **wt%** |
| **Paraffins** | **51.77** | **51.81** |
| **Naphthenes** | **46.81** | **47.97** |
| **Aromatics** | **1.42** | **0.22** |
| **Total** | **100** | **100** |

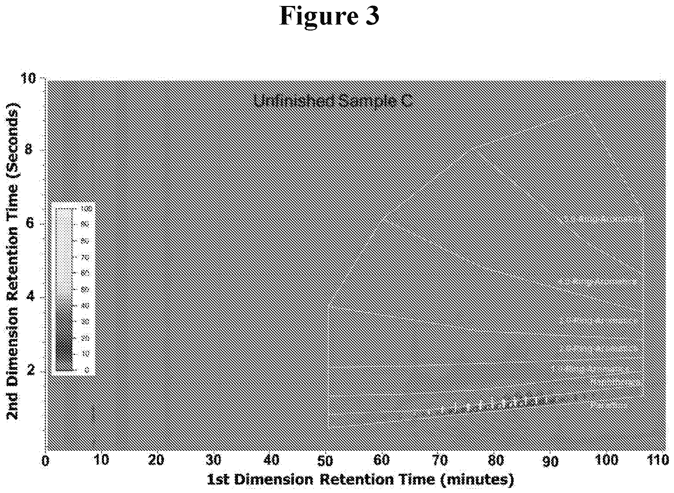

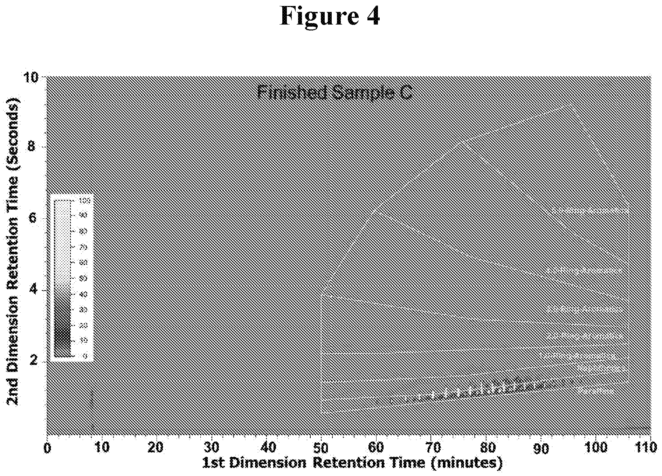

With reference to the foregoing unfinished and finished wax C samples, more detailed 2DGC analysis of the same wax sample may provide even more detail into the areas of the 2DGC chromatograph. Figure 3 is an illustrative embodiment of a 2DGC chromatograph illustrating the Unfinished Sample C broken out by its aromatic rings in terms of regions with 1, 2, 3, 4, and 5 ring aromatic systems. Figure 4, like the illustrative embodiment of Figure 2, may further illustrate that the compositions of high quality finished wax sample C ("Finished Sampled C") may have extremely low 2, 3, 4 and 5 ring aromatic contents. Table 3 sets forth in weight percentages the composition of the Unfinished Sample C and Finished Sample C according to the illustrative embodiments of Figures 3 and 4.

**Table 3**

| | **Unfinished Wax C** | **Finished Wax C** |
|---|---|---|
| **Class** | **wt%** | **wt%** |
| **Paraffins** | 51.75% | 51.81% |
| **Naphthenes** | 46.83% | 47.99% |
| **1 ring Aromatics** | 1.28% | 0.20% |
| **2 ring Aromatics** | 0.10% | 0.00% |
| **3 ring Aromatics** | 0.03% | 0.00% |
| **4 ring Aromatics** | 0.01% | 0.00% |
| **5 ring Aromatics** | 0.00% | 0.00% |
| **Total** | **100%** | **100%** |

Without being bound by any particular theory, it is postulated that higher order ring species (polynuclear aromatics, e.g., 3, 4, 5 ring aromatics) are detrimental to wax quality. As such, in certain embodiments, the finished waxes as described herein have approximately 0%wt 5 ring aromatics. In additional embodiments, the finished waxes as described herein have approximately 0%wt of aromatics having 4 or more rings. In additional embodiments, the finished waxes as described herein have approximately 0%wt of aromatics having 3 or more rings. In additional embodiments, the finished waxes as described herein have approximately 0%wt of aromatics having 2 or more rings.

Therefore, it has been unexpectedly discovered that contrary to conventional wisdom and prior art teachings, paraffin waxes having relatively high OIW content can have a food grade quality with low color and odor and thus be suitable for use in candle applications and/or food packaging/food grade applications while also having very low aromatic contents, and/or an increased ease and efficiency of manufacture due to reduced processing steps and ease of batch preparation.

The foregoing description, drawings and illustrative embodiments clearly illustrate the advantages encompassed by the process of the present disclosure and the benefits to be afforded with the use thereof.

## Claims

1. A wax composition comprising a hydro-finished paraffin wax having an oil in wax (OIW) content as per ASTM D721 of between 5.5%wt and 33% wt, and between 0 mg/kg and 30 mg/kg sulfur as per ASTM 2622, wherein the hydro-finished paraffin wax has a Saybolt color of greater than 14 as per ASTM D6045 and/or an odor of less than or equal to 2 as per ASTM D1833, and meets FDA food grade quality requirements as per FDA CFR 172.886.

2. The wax composition of claim 1, wherein the hydro-finished paraffin wax comprises an OIW between 5.5%wt and 20.0%wt.

3. The wax composition of claims 1-2, wherein the hydro-finished paraffin wax comprises an OIW between 6.0% wt and 18.0% wt.

4. The wax composition of claims 1-3, wherein the hydro-finished paraffin wax comprises an OIW of at least 11.0% wt.

5. The wax composition of claims 1-4, further comprising no more than 0.3% wt total aromatics as measured by 2DGC.

6. The wax composition of claims 1-5, further comprising no more than 0.1%wt total aromatics as measured by 2DGC.

7. The wax composition of claims 1-6, further comprising no more than 0.05 %wt total aromatics as measured by 2DGC.

8. The wax composition of claims 1-7, wherein the hydro-finished paraffin wax possesses a Saybolt color value greater than 16.

9. The wax composition of claims 1-8, wherein the hydro-finished paraffin wax possesses an odor of less than or equal to 2 as per ASTM D1833.

10. The wax composition of claims 1-9, wherein the hydro-finished paraffin wax is a petroleum-based wax.

11. The wax composition of claims 1-10, wherein the wax composition comprises a mixture of two or more paraffin wax components.

12. The wax composition of claims 11, wherein at least one paraffin wax component comprises an OIW between 6.0% wt and 20.0% wt.

13. The wax composition of claims 11, wherein at least one paraffin wax component comprises an OIW of at least 11.0% wt.

14. The wax composition of claims 11, wherein at least one paraffin wax component comprises between 0 mg/kg and 30 mg/kg sulfur.

15. A method of manufacturing a hydro-finished wax composition for one of a candle application and a food packaging/food grade application comprising the steps of hydrofinishing an unrefined or slack wax composition having an OIW of up to 33%wt, wherein the sulfur content in the wax is between 0 mg/kg and 30 mg/kg, and producing the wax composition of claim 1.

## Patentansprüche

1. Wachszusammensetzung, die ein Hydrofinishing unterzogenes Paraffinwachs mit einem Öl-in-Wachs (OIW)-Gehalt gemäß ASTM D721 zwischen 5,5 Gew.% und 33 Gew.% und zwischen 0 mg/kg und 30 mg/kg Schwefel gemäß ASTM 2622 umfasst, wobei das Hydrofinishing unterzogene Paraffinwachs eine Saybolt-Farbe größer als 14 gemäß ASTM D6045 und/oder einen Geruch kleiner als oder gleich 2 gemäß ASTM D1833 aufweist und die FDA-Nahrungsmittelqualitätsanforderungen gemäß FDA CFR 172.886 erfüllt.

2. Wachszusammensetzung nach Anspruch 1, bei der das Hydrofinishing unterzogene Paraffinwachs einen OIW zwischen 5,5 Gew.% und 20,0 Gew.% umfasst.

3. Wachszusammensetzung nach Anspruch 1 bis 2, bei der das Hydrofinishing unterzogene Paraffinwachs einen OIW zwischen 6,0 Gew.% und 18,0 Gew.% umfasst.

4. Wachszusammensetzung nach Anspruch 1 bis 3, bei der das Hydrofinishing unterzogene Paraffinwachs einen OIW von mindestens 11,0 Gew.% umfasst.

5. Wachszusammensetzung nach einem der Ansprüche 1 bis 4, die des Weiteren nicht mehr als 0,3 Gew.% Gesamtaromaten umfasst, gemessen gemäß 2DGC.

6. Wachszusammensetzung nach einem der Ansprüche 1 bis 5, die des Weiteren nicht mehr als 0,1 Gew.% Gesamtaromaten umfasst, gemessen gemäß 2DGC.

7. Wachszusammensetzung nach einem der Ansprüche 1 bis 6, die des Weiteren nicht mehr als 0,05 Gew.% Gesamtaromaten umfasst, gemessen gemäß 2DGC.

8. Wachszusammensetzung nach Anspruch 1 bis 7, bei der das Hydrofinishing unterzogene Paraffinwachs einen Saybolt-Farbwert größer als 16 besitzt.

9. Wachszusammensetzung nach einem der Ansprüche 1 bis 8, bei der das Hydrofinishing unterzogene Paraffinwachs einen Geruch kleiner als oder gleich 2 gemäß ASTM D1833 umfasst.

10. Wachszusammensetzung nach Anspruch 1 bis 9, bei der das Hydrofinishing unterzogene Paraffinwachs ein Wachs auf Erdölbasis ist.

11. Wachszusammensetzung nach einem der Ansprüche 1 bis 10, die eine Mischung aus zwei oder mehr Paraffinwachskomponenten umfasst.

12. Wachszusammensetzung nach Anspruch 11, bei der mindestens eine Paraffinwachskomponente ein OIW zwischen 6,0 Gew.% und 20,0 Gew.% umfasst.

13. Wachszusammensetzung nach Anspruch 11, bei der mindestens eine Paraffinwachskomponente ein OIW von mindestens 11,0 Gew.% umfasst.

14. Wachszusammensetzung nach Anspruch 11, bei der mindestens eine Paraffinwachskomponente zwischen 0 mg/kg und 30 mg/kg Schwefel umfasst.

15. Verfahren zum Herstellen einer Hydrofinishing unterzogenen Wachszusammensetzung für eine von einer Kerzenanwendung und einer Nahrungsmittelverpackungs-/Nahrungsmittelqualitätsanwendung, das die Stufen des Hydrofinishings einer unraffinierten oder Rohwachszusammensetzung mit einem IOW bis zu 33 Gew.%, wobei der Schwefelgehalt in dem Wachs zwischen 0 mg/kg und 30 mg/kg liegt, und Produzieren der Wachszusammensetzung gemäß Anspruch 1 umfasst.

## Revendications

1. Composition de cire comprenant une cire de paraffine hydrofinie ayant une teneur en huile dans la cire (OIW) conformément à la norme ASTM D721 comprise entre 5,5 % en poids et 33 % en poids, et entre 0 mg/kg et 30 mg/kg de soufre conformément à la norme ASTM 2622, la cire de paraffine hydrofinie ayant une couleur Saybolt supérieure à 14 conformément à la norme ASTM D6045 et/ou une odeur inférieure ou égale à 2 conformément à la norme ASTM D1833, et satisfaisant aux exigences de qualité alimentaire FDA conformément à FDA CFR 172.886.

2. Composition de cire selon la revendication 1, la cire de paraffine hydrofinie comprenant une OIW comprise entre 5,5 % en poids et 20,0 % en poids.

3. Composition de cire selon les revendications 1 à 2, la cire de paraffine hydrofinie comprenant une OIW comprise entre 6,0 % en poids et 18,0 % en poids.

4. Composition de cire selon les revendications 1 à 3, la cire de paraffine hydrofinie comprenant une OIW d'au moins 11,0 % en poids.

5. Composition de cire selon les revendications 1 à 4, comprenant en outre pas plus de 0,3 % en poids de composés aromatiques totaux comme mesuré par 2DGC.

6. Composition de cire selon les revendications 1 à 5, comprenant en outre pas plus de 0,1 % en poids de composés aromatiques totaux comme mesuré par 2DGC.

7. Composition de cire selon les revendications 1 à 6, comprenant en outre pas plus de 0,05 % en poids de composés aromatiques totaux comme mesuré par 2DGC.

8. Composition de cire selon les revendications 1 à 7, la cire de paraffine hydrofinie possédant une valeur de couleur Saybolt supérieure à 16.

9. Composition de cire selon les revendications 1 à 8, la cire de paraffine hydrofinie possédant une odeur inférieure ou égale à 2 conformément à la norme ASTM D1833.

10. Composition de cire selon les revendications 1 à 9, la cire de paraffine hydrofinie étant une cire à base de pétrole.

11. Composition de cire selon les revendications 1 à 10, la composition de cire comprenant un mélange de deux composants cire de paraffine ou plus.

12. Composition de cire selon la revendication 11, au moins un composant cire de paraffine comprenant une OIW comprise entre 6,0 % en poids et 20,0 % en poids.

13. Composition de cire selon la revendication 11, au moins un composant cire de paraffine comprenant une OIW d'au moins 11,0 % en poids.

14. Composition de cire selon la revendication 11, au moins un composant cire de paraffine comprenant entre 0 mg/kg et 30 mg/kg de soufre.

15. Procédé de fabrication d'une composition de cire hydrofinie pour l'une parmi une application de bougie et une application d'emballage alimentaire/qualité alimentaire comprenant les étapes d'hydrofinition d'une composition de cire non raffinée ou de gatsch ayant une OIW allant jusqu'à 33 % en poids, la teneur en soufre dans la cire étant comprise entre 0 mg/kg et 30 mg/kg, et de production de la composition de cire selon la revendication 1.
